# EUROPEAN PATENT SPECIFICATION

(11) **EP 3 268 203 B1**
(45) Date of publication and mention of the grant of the patent: **01.05.2019**
(21) Application number: 16709063.8
(22) Date of filing: 10.03.2016
(51) Int. Cl.: B29C 45/40

(54) **APPARATUS FOR MOLDING PLASTIC ELEMENTS**
VORRICHTUNG ZUM FORMEN VON KUNSTSTOFFELEMENTEN
APPAREIL POUR LE MOULAGE D'ÉLÉMENTS EN PLASTIQUE

(30) Priority: 12.03.2015 IT VR20150042
(43) Date of publication of application: 17.01.2018
(73) Proprietor: Sacmi Imola S.C., 40026 Imola (IT)
(72) Inventor: MARASTONI, Daniele, 40017 San Giovanni In Persiceto (IT); MOSCA, Rossano, 31031 Caerano Di San Marco (IT)
(74) Representative: Modiano, Micaela Nadia
(86) International application number: PCT/EP2016/055101
(87) International publication number: WO 2016/142455

(56) References cited:
- EP-A1- 0 591 983
- CN-A- 102 601 943
- US-A1- 2012 177 774

## Description

The present invention relates to an apparatus for molding plastic elements such as, for example, preforms for the production of plastic containers or caps.

Typically, such apparatuses comprise a device for injection molding a plurality of elements made of plastics and a device for unloading the molded plastic elements from the molding device.

The molding device is associated with an extraction plate, which is adapted to move, on command, at least one part of the molding device in order to allow the unloading of the molded plastic elements.

The extraction plate is connected functionally, by way of a plurality of pusher and traction posts, to an actuation element.

The apparatus is further provided with an abutment body and actuation means, which act between the abutment body and the actuation element.

In particular, the actuation means are adapted to move, substantially parallel to the direction of extension of the pusher and traction posts, the actuation element with respect to the abutment body so as to actuate, by way of the pusher and traction posts, the extraction plate.

In the known solutions, the abutment body is positioned, with respect to the actuation element, on the opposite side with respect to the extraction plate.

The solution described above, although widely used, is not devoid of drawbacks, however.

In particular a certain difficulty has been encountered in accessing, for checking and maintenance operations, the actuation element, especially if it is necessary, owing to a change of format, to work on the pusher and traction posts.

Furthermore, between the actuation element and the abutment body guiding means must be provided, which are typically constituted by a plurality of linear guides intended to ensure the precision of movement and the support of the actuation element during its movement.

CN 102 601 943 A discloses an ejector mechanism for transmission of a ball screw pair, comprising three parts, namely a transmission device, a guide device and an ejector device which are connected through ejector guide plates and are installed between the front wall and rear wall of a box-shaped movable template, wherein two ball screws and two guide rods are respectively installed on two diagonal lines of a parallelogram, so as to guarantee the balance and uniformality of forces; under the driving of a servo motor, the ball screws transmit through the transmission of a synchronous belt and a belt wheel, so that a ball nut performs linear motion to drive the ejector guide plates to move along the axis of the guide rod, therefore, five ejector pins installed on the ejector guide plates realize ejection.

EP 0 591 939 A1 discloses in an injection molding machine, an ejection is conducted according to at least one of a speed control and a pressure control, until a load is reduced from the start of the ejection. After the load has been reduced, the ejection attended by a very small vibration is conducted. When the ejection is conducted according to the speed control, the deformation of a molded product as a result of the ejection by the ejector pin is reduced, leading to a reduced deformation restoring force.

US 2012/177774 A1 discloses an ejector retraction mechanism comprising a fixed actuator, and a pair of blocking members positively movable both in and out of the path of the actuator.

The aim of the present invention is to eliminate, or at least to drastically reduce, the above mentioned drawbacks.

Within this aim, an object of the invention is to provide an apparatus that makes it possible to access the actuation element and the pusher and traction posts in an extremely practical manner.

Another object of the invention is to make available an apparatus that makes it possible to reduce, and in some applications to eliminate, the linear guides arranged between the actuation element and the abutment body, with a consequent simplification in terms of design and construction.

This aim and these and other objects which will become better apparent hereinafter are achieved by an apparatus for molding plastic elements according to claim 1.

Further characteristics and advantages of the invention will become better apparent from the description of some preferred, but not exclusive, embodiments of an apparatus for molding plastic elements according to the invention, which are illustrated by way of non-limiting example in the accompanying drawings wherein:

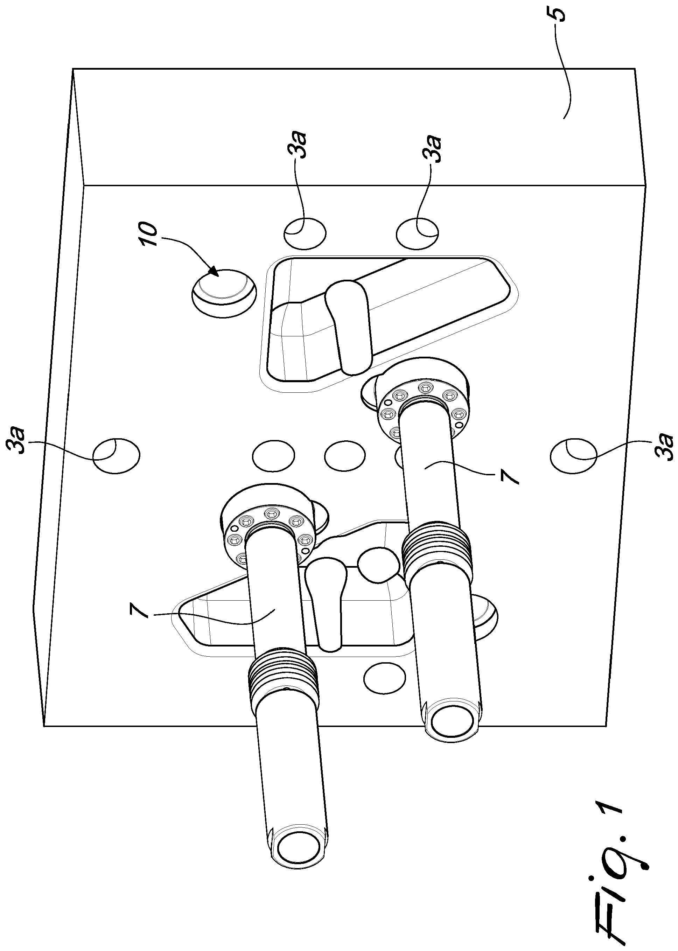

Figure 1 is a perspective view of the abutment body;

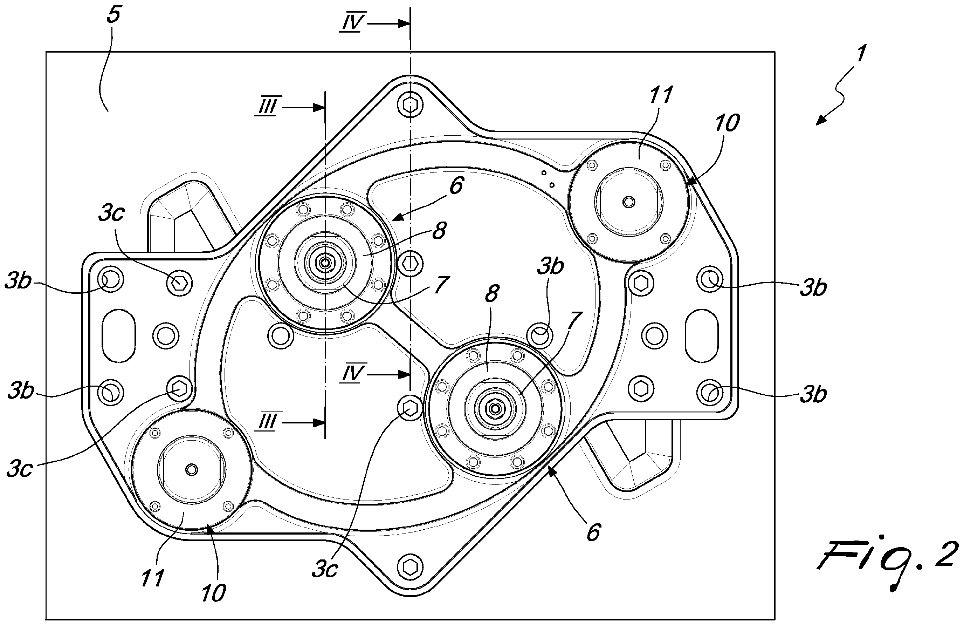

Figure 2 is a front elevation view of the apparatus;

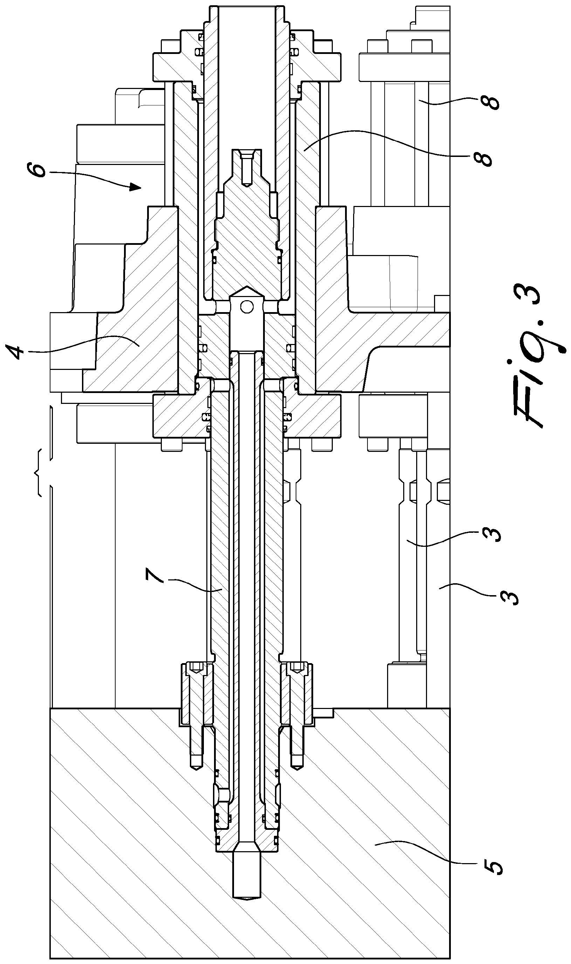

Figure 3 is a cross-sectional view of the apparatus, taken along the line III-III in Figure 2;
Figure 4 is a cross-sectional view, taken along a plane of arrangement designated by the line IV-IV in Figure 2, of a portion of the apparatus in which the actuation element is spaced apart from the abutment body;
Figure 5 is a cross-sectional view similar to the previous view and wherein the actuation element is brought close to the abutment body;

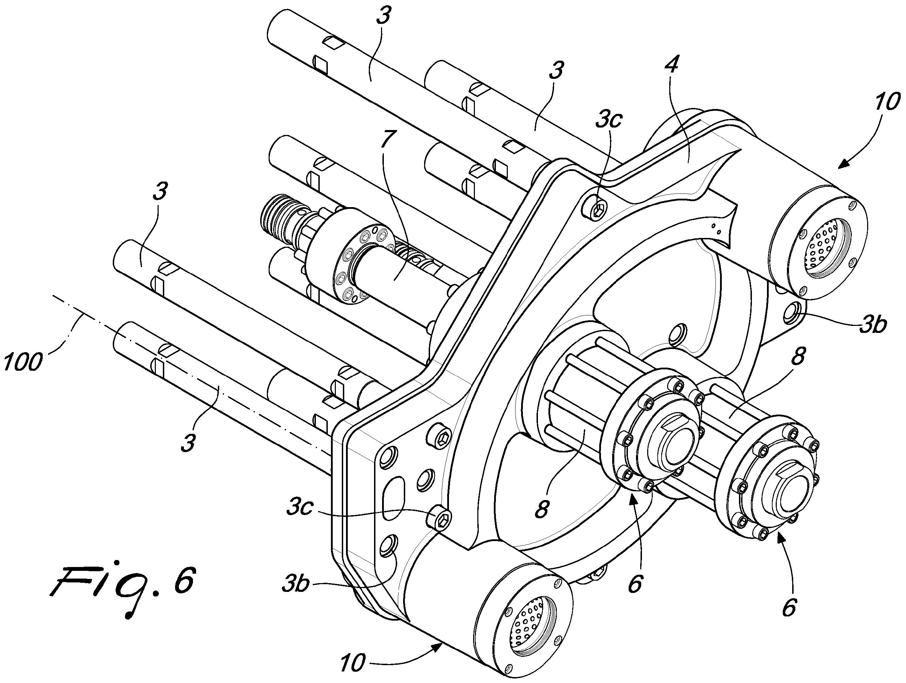

Figure 6 is a perspective view of the actuation element associated with the pusher and traction posts.

With reference to the figures, the present invention relates to an apparatus, generally designated by the reference numeral 1, for molding plastic elements.

The apparatus 1 comprises a device, not shown in the figures, for injection molding a plurality of elements made of plastics and a device for unloading the molded plastic elements from the molding device.

The molding device is associated with an extraction plate 2.

The extraction plate 2 is adapted to move, on command, at least one part of the molding device in order to allow the unloading of the plurality of elements made of plastics.

The extraction plate 2 is connected functionally, by way of a plurality of posts 3, to an actuation element 4.

Conveniently, the posts 3 extend along a direction of extension, designated with the reference numeral 100.

The posts 3 are, typically, the pusher and traction posts.

The apparatus 1 further comprises an abutment body 5 and actuation means 6 which act between the abutment body 5 and the actuation element 4.

The actuation means 6 are adapted to move, substantially parallel to the direction of extension 100 of the pusher and traction posts 3, the actuation element 4 with respect to the abutment body 5.

According to the present invention, the abutment body 5 is arranged between the extraction plate 2 and the actuation element 4.

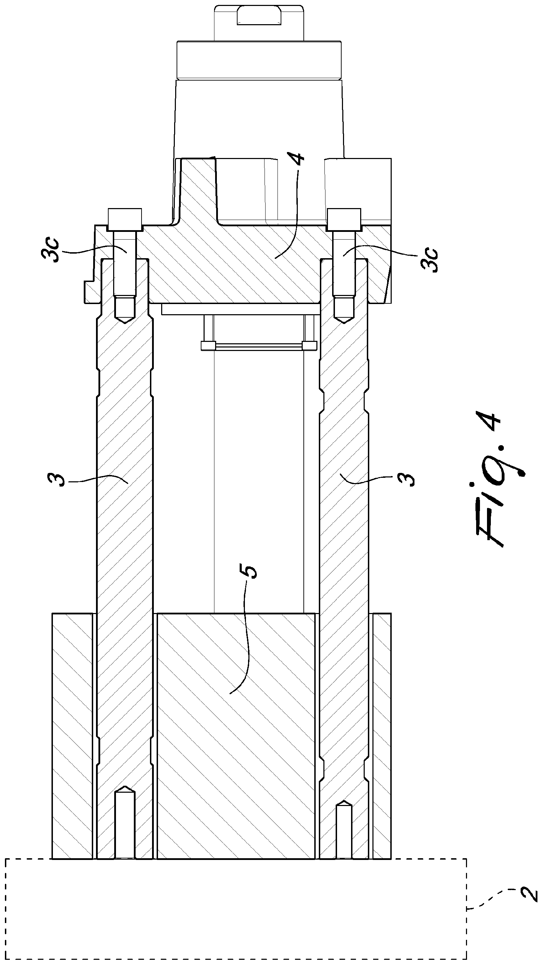

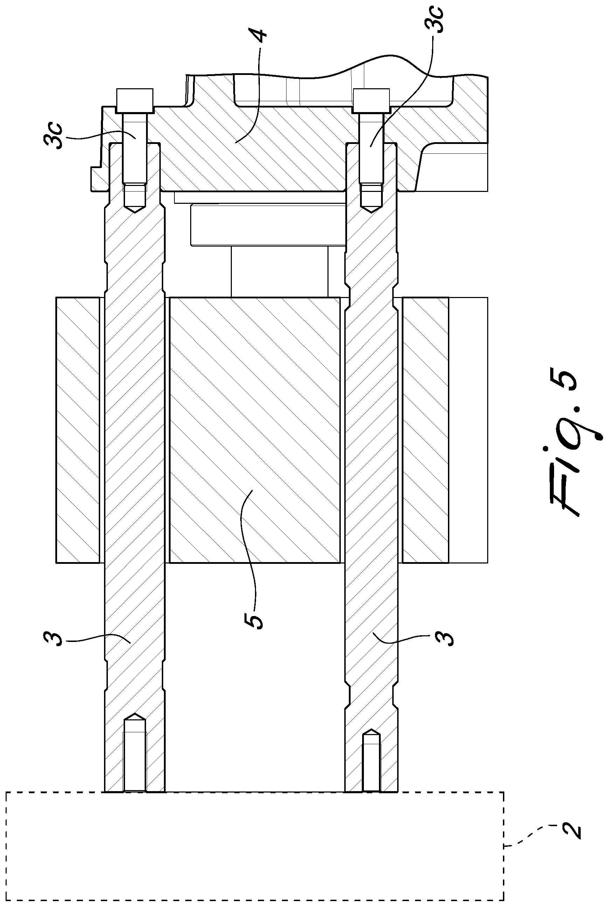

The movement of the actuation element 4 with respect to the abutment body 5 produces the transition of the extraction plate 2 from a retracted position (shown in Figure 5) and an extended position (shown in Figure 4) and vice versa.

In particular, with reference to the direction of extension 100 of the pusher and traction posts 3, the abutment body is arranged between the extraction plate 2 and the actuation element 4.

According to the invention the actuation means 6 comprise at least one linear actuator.

Such linear actuator comprises a stem 7 and a respective cylinder 8.

Conveniently, the stem 7 is supported integrally by the abutment body 5 and the respective cylinder 8 is supported integrally by the actuation element 4.

Advantageously, the (or each) linear actuator extends substantially parallel to the direction of extension 100 of the pusher and traction posts 3.

According to a particularly important aspect of the present invention, the (or each) linear actuator provides guiding means for moving the actuation element 4 with respect to the supporting body 5.

Advantageously, the extension in a longitudinal direction of the or of each cylinder 8 is at least equal to 120 % of the stroke of the stem 7 with respect to the cylinder 8 and, preferably, at least equal to 140 % of the stroke of the stem 7 with respect to the cylinder 8.

Having the cylinders integral with the actuation element 4 and the stems 7 integral with the abutment body 5 makes it possible to keep the support (through the cylinders 8) of the actuation element 4 constant during all of the back and forth motion of the cylinders 8 along the respective stems 7, making it possible to obtain a solution that enables the movement means 6 to perform the function of guiding means, thus reducing, and in some cases making it possible to eliminate, some or all of the movement guides with considerable advantages in terms of design and construction and increasing the ease of accessing the various components of the apparatus 1.

The extension, longitudinally, of the stems 8 with respect to the stroke also increases the guiding and supporting function of the movement means 6.

One or more guides 10, 11 can still be arranged between the actuation element 4 and the abutment body 5 for supporting and bearing the actuation element 3.

Conveniently, the actuation means 6 comprise at least two linear actuators, each one of which comprises a stem 7 and a respective cylinder 8.

In particular, the stems 7 are supported integrally by the abutment body 5 and the respective cylinders 8 are supported integrally by the actuation element 4.

Conveniently, the (or each) linear actuator is powered by a hydraulic circuit.

According to a preferred embodiment, the actuation element 4 comprises a plate-like body that lies on a plane that is substantially parallel to the plane of arrangement of the extraction plate 2.

The actuation element 4 defines a plurality of locking seats 3b with respect to which respective pusher and traction posts 3 can be selectively and removably locked and released by way of locking means 3c.

The locking means 3c can be associated with and disassociated from the actuation element 4 in order to lock and release the respective pusher and traction posts 3 by intervening on the surface 4a of the actuation element 4 which is on the opposite side with respect to the extraction plate 2.

The abutment body 5 has a plurality of through openings 3a which are arranged substantially facing toward the locking seats 3b and can be passed through by the pusher and traction posts 3 associated with the actuation element 4 during the operations to move the extraction plate 2 from the retracted position to the extended position and vice versa.

The special structure of the apparatus 1 and the positioning of the abutment body 5 on the same side of the extraction plate 2 as the actuation element 4 makes it possible to access the surface 4a extremely easily.

Preferably, the plastic elements comprise preforms for the production of plastic containers.

The plastic elements can also be constituted by caps.

Operation of an apparatus 1 according to the invention is evident from the foregoing description.

The apparatus 1, thanks to the action of the actuation means 6, actuates the movement of the extraction plate 2 which is moved between the retracted position and the extended position and vice versa.

Arranging the abutment body between the extraction plate 2 and the actuation element 4 allows an extremely practical and effective access to the actuation element 4 proper, thus facilitating operations on the pusher and traction posts 3.

Furthermore, having the actuation means 6 constituted by stems 7 and cylinders 8 that extend for a considerable length with respect to the stroke of the cylinders 8 makes it possible to ensure that such actuation means also perform the function of guiding means and supporting means for the actuation element 4, thus making it possible to limit, and in some cases eliminate, the use of the linear guides 10.

The invention, thus conceived, is susceptible of numerous modifications and variations, all of which are within the scope of the appended claims.

In practice the materials employed, provided they are compatible with the specific use, and the dimensions and shapes, may be any according to requirements.

Moreover, all the details may be substituted by other, technically equivalent elements.

This application claims the priority of the italian patent application VR2015A00042.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for molding plastic elements, which comprises a device for injection molding a plurality of elements made of plastics and a device for unloading said molded plastic elements from said molding device, said molding device being associated with an extraction plate (2) adapted to move, on command, at least one part of said molding device in order to allow the unloading of said plurality of plastic elements, said extraction plate (2) being connected functionally, by way of a plurality of posts (3), to an actuation element (4), there being an abutment body (5) and actuation means (6) which act between said abutment body (5) and said actuation element (4) and are adapted to move, substantially parallel to the direction of extension (100) of said posts (3), said actuation element (4) with respect to said abutment body (5), abutment body (5) being arranged between said extraction plate (2) and said actuation element (4), **characterized in that** said actuation means (6) comprise at least one linear actuator, which comprises a stem (7) and a respective cylinder (8), said stem (7) being supported integrally by said abutment body (5) and the respective cylinder (8) being supported integrally by said actuation element (4), and said at least one linear actuator providing guiding means for moving said actuation element (4) with respect to said supporting body (5).

2. The apparatus (1) according to claim 1, **characterized in that** said posts (3) comprise pusher and/or traction posts.

3. The apparatus (1) according to one or more of the preceding claims, **characterized in that** said at least one linear actuator extends substantially parallel to the direction of extension(100) of said pusher and traction posts (3).

4. The apparatus (1) according to one or more of the preceding claims, **characterized in that** the extension in a longitudinal direction of said cylinders (8) is at least equal to 120% of the stroke of the respective stem (7), so as to provide said guiding means.

5. The apparatus (1) according to one or more of the preceding claims, **characterized in that** said actuation means (6) comprise at least two linear actuators, each one of which comprises a stem (7) and a respective cylinder (8), said stems (7) being supported integrally by said abutment body (5) and the respective cylinders (8) being supported integrally by said actuation element (4).

6. The apparatus (1) according to one or more of the preceding claims, **characterized in that** said at least one linear actuator is powered by a hydraulic circuit.

7. The apparatus (1) according to one or more of the preceding claims, **characterized in that** said actuation element (4) comprises a plate-like body that lies on a plane that is substantially parallel to the plane of arrangement of said extraction plate (2).

8. The apparatus (1) according to one or more of the preceding claims, **characterized in that** said actuation element (4) defines a plurality of locking seats (3b) with respect to which respective pusher and traction posts (3) can be selectively and removably locked and released by way of locking means (3c).

9. The apparatus (1) according to one or more of the preceding claims, **characterized in that** said locking means (3c) can be associated with and disassociated from said actuation element (4) in order to lock and release the respective pusher and traction posts (3) with respect to the surface (4a) of said actuation element (4), said surface being on the opposite side with respect to said extraction plate (2).

10. The apparatus (1) according to one or more of the preceding claims, **characterized in that** said plastic elements comprise preforms for the production of plastic containers.

## Patentansprüche

1. Vorrichtung (1) zum Gießen von Kunststoffelementen, die eine Einrichtung zum Spritzgießen einer Vielzahl von Elementen, die aus Kunststoff hergestellt sind, aufweist, und eine Einrichtung zum Entladen der gegossenen Kunststoffelemente aus der Gießeinrichtung, wobei die Gießeinrichtung mit einer Extraktionsplatte (2) verbunden ist, die dazu ausgelegt ist, auf Kommando wenigstens einen Teil der Gießeinrichtung zu bewegen, um das Entladen der Vielzahl von Kunststoffelementen zu ermöglichen, wobei die Extraktionsplatte (2) mittels einer Vielzahl von Pfosten (3) funktional mit einem Betätigungselement (4) verbunden ist, wobei ein Anschlagskörper (5) und Betätigungsmittel (6) vorhanden sind, die zwischen dem Anschlagskörper (5) und dem Betätigungselement (4) wirken und dazu ausgelegt sind, das Betätigungselement (4) bezüglich des Anschlagskörpers (5) im Wesentlichen parallel zur Erstreckungsrichtung (100) der Pfosten (3) zu bewegen, wobei der Anschlagskörper (5) zwischen der Extraktionsplatte (2) und dem Betätigungselement (4) angeordnet ist, **dadurch gekennzeichnet, dass** die Betätigungsmittel (6) wenigstens einen Linearaktor aufweisen, der eine Stange (7) und einen entsprechenden Zylinder (8) aufweist, wobei die Stange (7) integral durch den Anschlagskörper (5) gestützt wird und der entsprechende Zylinder (8) integral durch das Betätigungselement (4) gestützt wird, und wobei der wenigstens eine Linearaktor Führungsmittel zum Bewegen des Betätigungselements (4) bezüglich des Stützkörpers (5) bereitstellt.

2. Vorrichtung (1) nach Anspruch 1, **dadurch gekennzeichnet, dass** die Pfosten (3) Schub- und/oder Zugpfosten aufweisen.

3. Vorrichtung (1) nach einem oder mehreren der vorhergehenden Ansprüche, **dadurch gekennzeichnet, dass** sich der wenigstens eine Linearaktor im Wesentlichen parallel zur Erstreckungsrichtung (100) der Schub- und Zugpfosten (3) erstreckt.

4. Vorrichtung (1) nach einem oder mehreren der vorhergehenden Ansprüche, **dadurch gekennzeichnet, dass** die Erstreckung der Zylinder (8) in Längsrichtung wenigstens gleich 120% des Hubs der jeweiligen Stange (7) ist, um das Führungsmittel bereitzustellen.

5. Vorrichtung (1) nach einem oder mehreren der vorhergehenden Ansprüche, **dadurch gekennzeichnet, dass** die Betätigungsmittel (6) wenigstens zwei Linearaktoren aufweisen, von denen jeder eine Stange (7) und einen entsprechenden Zylinder (8) aufweist, wobei die Stangen (7) integral durch den Anschlagskörper (5) gestützt werden und die entsprechenden Zylinder (8) integral durch das Betätigungselement (4) gestützt werden.

6. Vorrichtung (1) nach einem oder mehreren der vorhergehenden Ansprüche, **dadurch gekennzeichnet, dass** der wenigstens eine Linearaktor durch eine Hydraulikschaltung angetrieben wird.

7. Vorrichtung (1) nach einem oder mehreren der vorhergehenden Ansprüche, **dadurch gekennzeichnet, dass** das Betätigungselement (4) einen plattenartigen Körper aufweist, der auf einer Ebene liegt, welche im Wesentlichen parallel zu der Anordnungsebene der Extraktionsplatte (2) ist.

8. Vorrichtung (1) nach einem oder mehreren der vorhergehenden Ansprüche, **dadurch gekennzeichnet, dass** das Betätigungselement (4) eine Vielzahl von Verriegelungssitzen (3b) definiert, bezüglich welcher jeweilige Schub- und Zugpfosten (3) selektiv und lösbar mittels Verriegelungsmitteln (3c) verriegelt und freigegeben werden können.

9. Vorrichtung (1) nach einem oder mehreren der vorhergehenden Ansprüche, **dadurch gekennzeichnet, dass** die Verriegelungsmittel (3c) mit dem Betätigungselement (4) verbunden und davon getrennt werden können, um die jeweiligen Schub- und Zugpfosten (3) bezüglich der Oberfläche (4a) des Betätigungselements (4) zu verriegeln und freizugeben, wobei sich die Oberfläche in Bezug auf die Extraktionsplatte (2) auf der gegenüberliegenden Seite befindet.

10. Vorrichtung (1) nach einem oder mehreren der vorhergehenden Ansprüche, **dadurch gekennzeichnet, dass** die Kunststoffelemente Vorformen zur Herstellung von Kunststoffbehältern aufweisen.

## Revendications

1. Appareil (1) destiné à mouler des éléments en matière plastique, qui comporte un dispositif pour mouler par injection une pluralité d'éléments en matière plastique et un dispositif pour décharger lesdits éléments moulés en matière plastique dudit dispositif de moulage, ledit dispositif de moulage étant associé à une plaque d'extraction (2) adaptée pour déplacer, sur commande, au moins une partie dudit dispositif de moulage afin de permettre le déchargement de ladite pluralité d'éléments en matière plastique, ladite plaque d'extraction (2) étant fonctionnellement reliée, au moyen d'une pluralité de montants (3), à un élément d'actionnement (4), un corps de butée (5) et des moyens d'actionnement (6) y étant agencés qui agissent entre ledit corps de butée (5) et ledit élément d'actionnement (4) et sont adaptés pour déplacer, de manière sensiblement parallèle à la direction d'extension (100) desdits montants (3), ledit élément d'actionnement (4) par rapport audit corps de butée (5), ledit corps de butée (5) étant agencé entre ladite plaque d'extraction (2) et ledit élément d'actionnement (4), **caractérisé en ce que** lesdits moyens d'actionnement (6) comportent au moins un actionneur linéaire, qui comporte une tige (7) et un vérin (8) respectif, ladite tige (7) étant supportée d'un seul tenant par ledit corps de butée (5) et le vérin (8) respectif étant supporté d'un seul tenant par ledit élément d'actionnement (4), et ledit au moins un actionneur linéaire fournissant des moyens de guidage pour déplacer ledit élément d'actionnement (4) par rapport audit corps de support (5).

2. Appareil (1) selon la revendication 1, **caractérisé en ce que** lesdits montants (3) comportent des montants de poussée et/ou de traction.

3. Appareil (1) selon une ou plusieurs des revendications précédentes, **caractérisé en ce que** ledit au moins un actionneur linéaire s'étend de manière sensiblement parallèle à la direction d'extension (100) desdits montants de poussée et de traction (3).

4. Appareil (1) selon une ou plusieurs des revendications précédentes, **caractérisé en ce que** l'extension dans une direction longitudinale desdits vérins (8) est au moins égale à 120 % de la course de la tige (7) respective, de manière à fournir lesdits moyens de guidage.

5. Appareil (1) selon une ou plusieurs des revendications précédentes, **caractérisé en ce que** lesdits moyens d'actionnement (6) comportent au moins deux actionneurs linéaires, dont chacun comporte une tige (7) et un vérin (8) respectif, lesdites tiges (7) étant supportées d'un seul tenant par ledit corps de butée (5) et les vérins (8) respectifs étant supportés d'un seul tenant par ledit élément d'actionnement (4).

6. Appareil (1) selon une ou plusieurs des revendications précédentes, **caractérisé en ce que** ledit au moins un actionneur linéaire est mû par un circuit hydraulique.

7. Appareil (1) selon une ou plusieurs des revendications précédentes, **caractérisé en ce que** ledit élément d'actionnement (4) comporte un corps analogue à une plaque qui se situe sur un plan qui est sensiblement parallèle au plan d'agencement de ladite plaque d'extraction (2).

8. Appareil (1) selon une ou plusieurs des revendications précédentes, **caractérisé en ce que** ledit élément d'actionnement (4) définit une pluralité de sièges de blocage (3b) par rapport auxquels des montants de poussée et de traction (3) respectifs peuvent être bloqués et libérés de manière sélective et amovible au moyen de moyens de blocage (3c).

9. Appareil (1) selon une ou plusieurs des revendications précédentes, **caractérisé en ce que** lesdits moyens de blocage (3c) peuvent être associés audit élément d'actionnement (4) et être dissociés de celui-ci afin de bloquer et de libérer les montants de poussée et de traction (3) respectifs par rapport à la surface (4a) dudit élément d'actionnement (4), ladite surface étant sur le côté opposé par rapport à ladite plaque d'extraction (2).

10. Appareil (1) selon une ou plusieurs des revendications précédentes, **caractérisé en ce que** lesdits éléments en matière plastique comportent des préformes pour la production de récipients en matière plastique.
